(19) Europäisches Patentamt
European Patent Office
Office européen des brevets

(11) Veröffentlichungsnummer: **0 247 618 B1**

(12) **EUROPÄISCHE PATENTSCHRIFT**

(45) Veröffentlichungstag der Patentschrift: **28.07.93**

(51) Int. Cl.[5]: **C09B 35/46**, C09D 11/00, D06P 3/32

(21) Anmeldenummer: **87107778.0**

(22) Anmeldetag: **29.05.87**

(54) **Neue heterocyclenhaltige Trisazofarbstoffe.**

(30) Priorität: **30.05.86 DE 3618265**

(43) Veröffentlichungstag der Anmeldung:
**02.12.87 Patentblatt 87/49**

(45) Bekanntmachung des Hinweises auf die Patenterteilung:
**28.07.93 Patentblatt 93/30**

(84) Benannte Vertragsstaaten:
**CH DE FR GB IT LI**

(56) Entgegenhaltungen:
**FR-A- 2 258 429**
**FR-A- 2 360 634**

(73) Patentinhaber: **BASF Aktiengesellschaft**
**Carl-Bosch-Strasse 38**
**W-6700 Ludwigshafen(DE)**

(72) Erfinder: **Breitschaft, Walter, Dr.Dipl.-Chem**
**Eichelbergstrasse 1**
**W-6800 Mannheim 1(DE)**
Erfinder: **Mayer, Udo, Dr.**
**Max-Slevogt-Strasse 27**
**W-6710 Frankenthal(DE)**
Erfinder: **Seybold, Guenther, Dr.**
**Friedrich-Ebert-Strasse 14**
**W-6708 Neuhofen(DE)**

EP 0 247 618 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.6/3.3.1)

## Beschreibung

Die Erfindung betrifft Verbindungen der Formel I

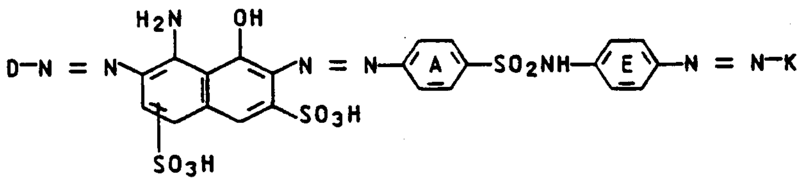

(I),

in der
die Ringe A und E noch durch Methyl, Methoxy, Chlor oder Hydroxysulfonyl substituiert sein Können, und

D Phenyl, das gegebenenfalls durch Fluor, Chlor, Brom, Nitro, Cyano, $C_1$-$C_4$-Alkylsulfonyl, $C_1$-$C_8$-Alkyl, $C_1$-$C_4$-Alkoxy, Carboxyl, $C_1$-$C_4$-Alkoxycarbonyl, Hydroxysulfonyl, Carbamoyl, $C_1$-$C_4$-Mono- oder Dialkylcarbamoyl, Pyrrolidinocarbonyl, Piperidinocarbonyl, Morpholinocarbonyl, Piperazinocarbonyl, N-($C_1$-$C_4$-Alkyl)piperazinocarbonyl, Sulfamoyl, $C_1$-$C_4$-Mono- oder Dialkylsulfamoyl, Pyrrolidinosulfonyl, Piperidinosulfonyl, Morpholinosulfonyl, Piperazinosulfonyl oder N-($C_1$-$C_4$-Alkyl)-piperazinosulfonyl substituiert ist und

K einen Rest der Formel

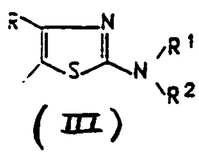

(III),

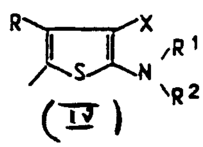

(IV),

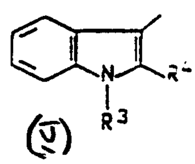

(V),

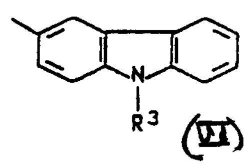

(VI),

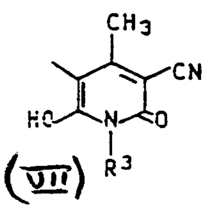

(VII),

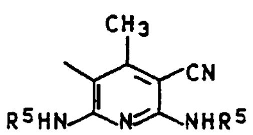

(VIII),

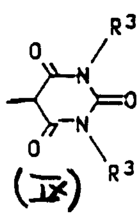

(IX),

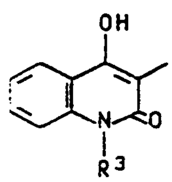

(X),

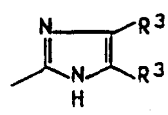

(XI)

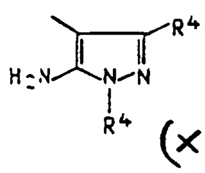

(XII)

oder

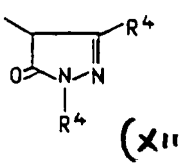

(XIII).

bedeuten,
wobei

R für Wasserstoff, $C_1$-$C_4$-Alkyl, gegebenenfalls durch Chlor, Brom, Methyl, Methoxy, Ethoxy, Dimethylamino oder Diethylamino substituiertes Phenyl oder Thienyl,

$R^1$ und $R^2$ unabhängig voneinander für Wasserstoff, gegebenenfalls substituiertes $C_1$-$C_{10}$-Alkyl, $C_5$-$C_7$-Cycloalkyl, gegebenenfalls substituiertes Phenyl, Allyl oder zusammen mit dem sie verbindenden Stickstoffatom einen fünf- oder sechsgliedrigen gesättigten heterocyclischen Rest,

$R^3$ für Wasserstoff oder $C_1$-$C_4$-Alkyl,

$R^4$ für Wasserstoff, $C_1$-$C_4$-Alkyl oder Phenyl,

$R^5$ für Wasserstoff oder gegebenenfalls substituiertes $C_1$-$C_{10}$-Alkyl, gegebenenfalls substituiertes Phenyl oder Allyl und

X für Cyano, Nitro, $C_1$-$C_4$-Mono- oder Dialkylcarbamoyl, Pyrrolidinocarbonyl, Piperidinocarbonyl, Morpholinocarbonyl, Piperazinocarbonyl, N-($C_1$-$C_4$-Alkyl)piperazinocarbonyl, $C_1$-$C_4$-Alkoxycarbonyl, $C_1$-$C_4$-Alkylcarbonyl, gegebenenfalls substituiertes Phenylcarbonyl, $C_1$-$C_4$-Alkylsulfonyl

oder gegebenenfalls substituiertes Phenylsulfonyl stehen, und deren Salze.

Aus der FR-A-2 258 429 sind ähnliche Farbstoffe bekannt, die jedoch nicht über eine heterocyclische Kupplungskomponente verfügen.

$C_1$-$C_4$-Mono- oder Dialkylcarbamoyl- oder -sulfamoylreste sind z. B.: $CONHCH_3$, $CONHC_2H_5$, $CONHC_3H_7$, $CONHC_4H_9$, $CON(CN_3)_2$, $CON(C_2H_5)_2$, $CON(C_3H_7)_2$,

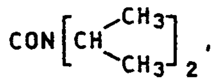

$SO_2NHCH_3$, $SO_2NHC_2H_5$, $SO_2NHC_3H_7$, $SO_2NHC_4H_9$, $SO_2N(CH_3)_2$, $SO_2N(C_2H_5)_2$, $SO_2N(C_3H_7)_2$ oder

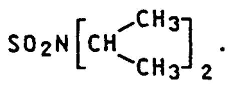

Besonders hervorzuheben sind Farbstoffe, die als Kupplungskomponenten solche der Formeln III bis XI aufweisen.

Alle in den oben genannten Resten auftretenden Alkylgruppen können sowohl geradkettig als auch verzweigt sein.

Für den Fall, daß in den Resten $R^1$ , $R^2$ und $R^5$ die $C_1$-$C_{10}$-Alkylreste substituiert sind, kommen Hydroxy, $C_1$-$C_4$-Alkoxy, Phenoxy, Hydroxysulfonylphenoxy, $C_1$-$C_4$-Dialkylamino, Pyrrolidino, Piperidino, Morpholino, Piperazino, N-($C_1$-$C_4$-Alkyl)piperazino, Phenyl, Hydroxysulfonylphenyl, Cyano, $C_1$-$C_4$-Alkoxycarbonyl oder $C_1$-$C_4$-Alkanoylamino als Substituenten in Betracht. Weiterhin kann die Alkylkette auch durch 1 bis 4 Sauerstoffatome unterbrochen sein.

Für den Fall, daß in den Resten $R^1$, $R^2$, $R^4$, $R^5$ und X die dort auftretenden Phenylreste substituiert sind, kommen Halogen, insbesondere Fluor, Chlor oder Brom, $C_1$-$C_4$-Alkyl, $C_1$-$C_4$-Alkoxy, $C_1$-$C_4$-Mono- oder Dialkylamino, Hydroxy, Nitro oder Hydroxysulfonyl in Betracht.

Die Reste $R^1$, $R^2$ und $R^5$ sind beispielsweise:

$CH_3$, $C_2H_5$, $C_3H_7$, $C_4H_9$, $C_5H_{11}$, $C_6H_{13}$, $C_7H_{15}$, $C_8H_{17}$, $C_9H_{19}$, $C_{10}H_{21}$, $C_2H_4OH$, $C_3H_6OH$, $CH_2CHOHCH_3$, $C_2H_4OCH_3$, $C_2H_4OC_2H_5$, $C_2H_4OC_4H_9$, $(CH_2)_3OH$, $(CH_2)_3OCH_3$, $(CH_2)_3OC_2H_5$, $(CH_2)_3OC_4H_9$, $C_2H_4OC_2H_4OH$, $C_2H_4OC_2H_4OCH_3$, $(CH_2)_3OC_2H_4OH$, $(CH_2)_3OC_2H_4OCH_3$, $(CH_2)_3OC_2H_4OC_2H_5$, $(CH_2)_3OC_2H_4OC_4H_9$, $(CH_2)_3OC_2H_4OC_6H_5$, $(CH_2)_3OC_2H_4OC_6H_4SO_3H$, $C_2H_4N(CH_3)_2$, $C_2H_4N(C_2H_5)_2$, $C_2H_4N(CH_2)_4$, $C_2H_4N(CH_2)_5$, $(CH_2)_3NHCOCH_3$, $(CH_2)_3N(CH_3)_2$, $(CH_2)_3N(C_2H_5)_2$, $(CH_2)_3N(CH_2)_4$, $(CH_2)_3N(CH_2)_5$, $(CH_2)_3N(C_2H_4)_2O$, $(CH_2)_3N(C_2H_4)_2NCH_3$, $C_2H_4CN$, $C_2H_4COOCH_3$, $C_2H_4COOC_2H_5$, $CH_2$-$CH=CH_2$, $CH_2C_6H_5$, $C_2H_4C_6H_5$, $C_2H_4C_6H_4SO_3H$, $C_6H_5$, $C_6H_4Cl$, $C_6H_4Br$, $C_6H_4CH_3$, $C_6H_4OCH_3$, $C_6H_4OC_2H_5$ oder $C_6H_4SO_3H$.

Die Reste $R^1$ und $R^2$ sind weiterhin beispielsweise Cyclopentyl, Cyclohexyl oder Cycloheptyl.

Für den Fall, daß die Reste $R^1$ und $R^2$ zusammen mit dem die verbindenden Stickstoffatom einen fünf- oder sechsgliedrigen gesättigten heterocyclischen Rest bilden, sind folgende Reste beispielsweise zu nennen: Pyrrolidino, Piperidino, Morpholino, Piperazino, N-($C_1$-$C_4$-Alkyl)piperazino oder N-(2-Hydroxyethyl)-piperazino.

Der Rest X ist beispielsweise Methoxycarbonyl, Ethoxycarbonyl, Propoxycarbonyl, Isopropoxycarbonyl, Butoxycarbonyl, Isobutoxycarbonyl, sec-Butoxycarbonyl, Methyl-, Ethyl-, Propyl-, Isopropyl-, Butyl-, Isobutyl- oder sec-Butylcarbonyl oder -sulfonyl, Phenylcarbonyl, Phenylsulfonyl, 4-Fluorphenyl-, 4-Chlorphenyl-, 4-Bromphenyl-, 2-Methylphenyl-, 4-Methoxyphenyl-, 2-Ethoxyphenyl-, 4-Nitrophenyl- oder 4-Hydroxysulfonylphenylcarbonyl oder -sulfonyl.

Als Salze der Farbstoffe I kommen dabei Metall- oder Ammoniumsalze in Betracht. Metallsalze sind insbesondere Lithium, Natrium oder Kaliumsalze. Unter Ammoniumsalzen im erfindungsgemäßen Sinne sind solche Salze zu verstehen, die entweder unsubstituierte oder substituierte Ammoniumkationen aufweisen. Substituierte Ammoniumkationen sind z. B. Monoalkyl-, Dialkyl-, Trialkyl-, Tetraalkyl- oder Benzyltrialkylammoniumkationen oder solche Kationen, die sich von stickstoffhaltigen fünf- oder sechsgliedrigen gesättigten Heterocyclen ableiten, wie Pyrrolidinium-, Piperidinium-, Morpholinium-, Piperazinium-oder N-Alkylpiperaziniumkationen oder deren N-monoalkyl- oder N,N-dialkylsubstituierten Produkte. Unter Alkyl ist dabei im allgemeinen geradkettiges oder verzweigtes $C_1$-$C_{20}$-Alkyl zu verstehen, das durch Hydroxylgruppen substituiert und/oder durch Sauerstoffatome unterbrochen sein kann.

Zur Herstellung der Farbstoffe der Formel I kann man eine Diazoniumverbindung der Formel II

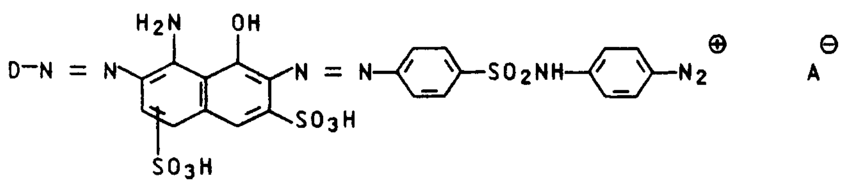 (II),

in der D die oben genannte Bedeutung besitzt und $A^{\ominus}$ ein Anion bedeutet (z. B. Chlorid oder Sulfat), mit einer Kupplungskomponente der Formel III

HK (III),

in der K die oben genannte Bedeutung besitzt, nach an sich bekannten Methoden umsetzen.

Die Farbstoffe der Formel I haben in der Regel schwarze Farbtöne und können teilweise in stabile Flüssigeinstellungen übergeführt werden. Sie eignen sich insbesondere zum Färben von Leder und Papier. In Form der Flüssigeinstellungen sind sie als Tinten geeignet. Solche Tinten können z.B. für das Ink-Jet-Verfahren verwendet werden, da sich ein großer Teil der Farbstoffe durch gute Wasserlöslichkeit und Thermostabilität auszeichnet.

Von besonderer Bedeutung sind Verbindungen der Formel Ia

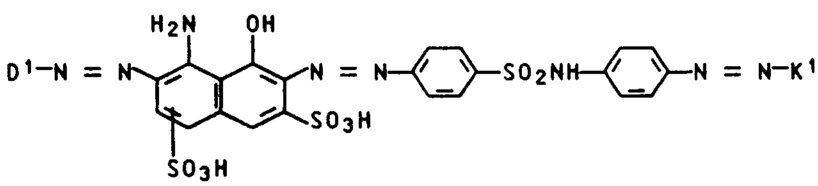 (Ia),

in der

- $D^1$ Phenyl. das gegebenenfalls durch Chlor, Brom, Nitro, Cyano, Hydroxysulfonyl, Sulfamoyl, $C_1$-$C_4$-Mono- oder Dialkylsulfamoyl, Pyrrolidinosulfonyl, Piperidinosulfonyl, Morpholinosulfonyl, Piperazinosulfonyl oder N-($C_1$-$C_4$-Alkyl)piperazinosulfonyl substituiert ist und
- $k^1$ den Rest einer Kupplungskomponente aus der Thiazolreihe bedeuten, sowie deren Salze.

Insbesondere besitzen dabei die Thiazolkupplungskomponenten die folgende Struktur:

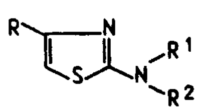 ,

wobei R, $R^1$ und $R^2$ jeweils die oben genannte Bedeutung besitzen.

Weitere Einzelheiten der Herstellung können den Beispielen entnommen werden, in denen sich Angaben über Teile und Prozente, sofern nicht anders vermerkt, auf das Gewicht beziehen.

Beispiel 1

11,5 Teile 4-Nitroanilin wurden in 85 Teilen Wasser und 33 Volumenteilen 38 %iger Salzsäure bei 5 °C mit 27,4 Volumenteilen 23 %iger Natriumnitritlösung diazotiert. Nach 30 Minuten wurde der Nitritüberschuß mit Amidosulfonsäure entfernt. 31,8 Teile 1-Amino-8-naphtol-3,6-disulfonsäure wurden in 140 Teilen Wasser mit 50 %iger Natronlauge neutral gelöst und bei 10 °C in die Diazoniumsalzlösung eingetropft. Nach beendeter Kupplung wurde mit Natriumacetatlösung ein pH-Wert von 3,5 eingestellt. 29,3 Teile 4,4'-Diaminobenzolsulfanilid wurden in 300 Teilen Wasser und 40 Volumenteilen 38 %iger Salzsäure gelöst und bei 0 °C mit 53,7 Volumenteilen 23 %iger Natriumnitritlösung tetrazotiert. Nach 30 Minuten entfernte man

den Nitritüberschuß mit Amidosulfonsäure und ließ die Tetrazoniumsalzlösung innerhalb von 10 Minuten bei 0 °C in die Suspension der ersten Kupplung einlaufen. Man stellte mit 50 %iger Natronlauge einen pH-Wert von 9,5 ein und ließ nach beendeter halbseitiger Kupplung (ca. 30 Minuten bei 0/5 °C) eine Lösung von 19,5 Teilen 2-Diethylamino-4-phenylthiazol in 20 Volumenteilen 0,5-N-Salzsäure zulaufen. Der pH-Wert wurde mit Natronlauge auf 10 gestellt und das Reaktionsgemisch bis zur beendeten Kupplung bei 5 - 10 °C gerührt. Anschließend wurde auf 60 °C erwärmt und der Farbstoff mit Natriumchloridlösung ausgefällt. Man erhielt nach Isolierung und Trocknung 82 Teile eines schwarzen Farbstoffs, der in Form der freien Säure der Formel

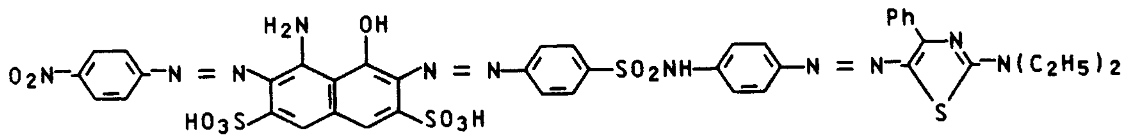

entspricht. Er lieferte als 8 %ige Tinte (Wasser/Glykol: 9/1) auf Papier schwarze Färbungen. Die Tinte ist bei 180 °C stabil.

Beispiel 2

Man ersetzt in Beispiel 1 2-Diethylamino-4-phenylthiazol durch eine äquimolare Menge 2-(4′-Hydroxysulfonylphenylamino)-4-phenylthiazol (mit Natronlauge in Wasser bei pH = 9 gelöst) und fällte den Farbstoff bei pH = 4,5 aus. Man erhielt 97 Teile eines schwarzen Farbstoffs, der in Form der freien Säure der Formel

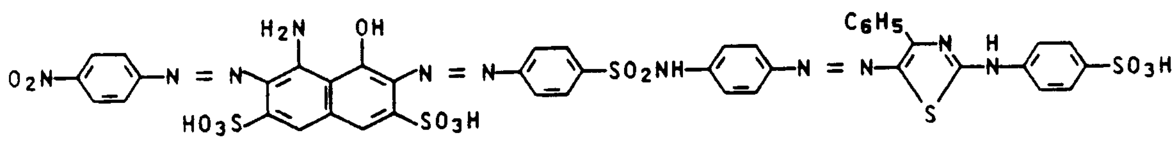

entspricht. Er lieferte als Tinte gemäß Beispiel 1 auf Papier grünstichig schwarze Färbungen. Die Tinte ist bei 240 °C stabil.

Beispiel 3

Man ersetzt in Beispiel 1 1-Amino-8-naphthol-3,6-disulfonsäure durch eine gleich große Menge 1-Amino-8-naphthol-4,6-disulfonsäure und erhielt einen Farbstoff, der in Form der freien Säure der Formel

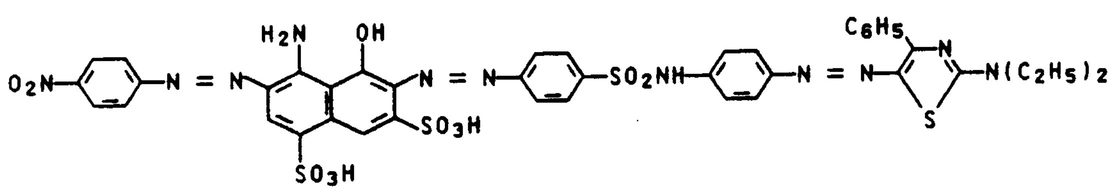

entspricht. Sein Farbton und seine Eigenschaften sind dem Farbstoff aus Beispiel 1 sehr ähnlich.

Beispiel 4

8 Teile Sulfanilamid wurden in 75 Teilen Wasser/25 Volumenteilen 38 %iger Salzsäure bei 0 °C mit 18 Volumenteilen 23 %iger Natriumnitritlösung diazotiert. Nach 30 Minuten wurde der Nitritüberschuß mit Amidosulfonsäure zerstört. 18,7 Teile 1-Amino-8-naphthol-3,6-disulfonsäure wurden in 100 Teilen Wasser mit 50 %iger Natronlauge neutral gelöst und bei unter 10 °C in die Diazoniumsalzlösung getropft. Nach beendeter Kupplung wurde mit Natronlauge ein pH-Wert von 6 - 7 eingestellt, dann ließ man bei 0 °C eine aus 17,3 Teilen 4,4′-Diaminobenzolsulfanilid nach Beispiel 1 bereitete Tetrazoniumsalzlösung einlaufen.

Man stellte mit Natronlauge einen pH-Wert von etwa 9 ein und rührte 15 Minuten bei 0 bis 5 °C. Nach beendeter halbseitiger Kupplung wurden bei 0 °C 9,7 Teile 3-Cyano-2-morpholinothiophen in 20 Volumenteilen 0,5-N-Salzsäure zugetropft und der pH-Wert mit Natronlauge auf 9 - 10 eingestellt. Nach beendeter Kupplung wurde mit 38 %iger Salzsäure ein pH-Wert von 5 eingestellt und der Farbstoff mit Natriumchlorid ausgefällt. Nach Isolierung und Trocknung erhielt man 55 Teile eines schwarzen Farbstoffpulvers, das in Form der freien Säure die Formel

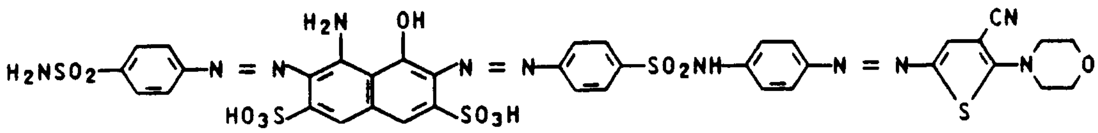

hat. Der Farbstoff liefert in Form einer gemäß Beispiel 1 hergestellten Tinte auf Papier blauschwarze Färbungen.

In den folgenden Tabellen sind weitere Beispiele aufgeführt, die analog den voranstehenden Vorschriften hergestellt wurden.

**Tabelle 1**

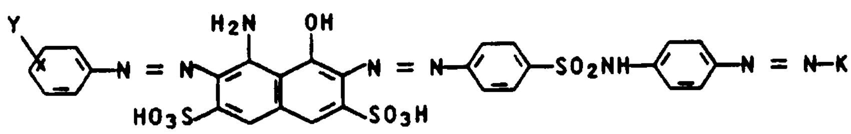

| Beispiel | Y | K | Nuance auf Papier |
|---|---|---|---|
| 5 | 4-$NO_2$ | 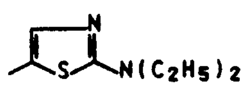 | grünschwarz |
| 6 | 4-$NO_2$ | 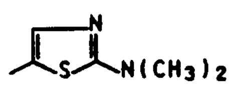 | grünschwarz |
| 7 | 4-$NO_2$ | 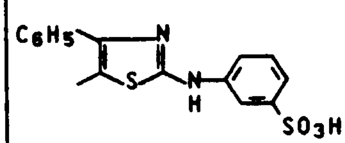 | schwarz |
| 8 | 4-$NO_2$ | 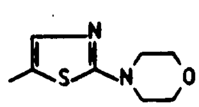 | grünschwarz |
| 9 | 4-$NO_2$ | 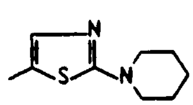 | blaustichig schwarz |

Tabelle 1 (Forts.)

| Beispiel | Y | K | Nuance auf Papier |
|---|---|---|---|
| 10 | $4-NO_2$ | 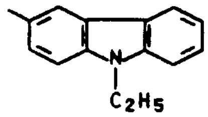 | blaustichig schwarz |
| 11 | $4-NO_2$ | 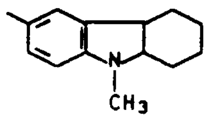 | rotstichig schwarz |
| 12 | $4-NO_2$ | 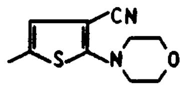 | grünschwarz |
| 13 | $4-NO_2$ | 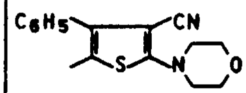 | schwarz |
| 14 | $4-NO_2$ | 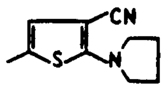 | grünstichig schwarz |
| 15 | $4-NO_2$ | 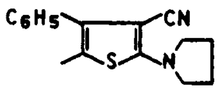 | blauschwarz |
| 16 | $4-NO_2$ | 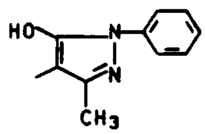 | rotstichig schwarz |
| 17 | $4-NO_2$ | 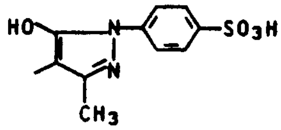 | schwarzgrün |
| 18 | $4-NO_2$ | 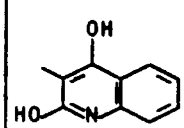 | braunstichig schwarz |
| 19 | $4-NO_2$ | 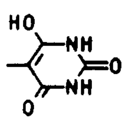 | rotstichig schwarz |

Tabelle 1 (Forts.)

| Beispiel | Y | K | Nuance auf Papier |
|---|---|---|---|
| 20 | 4-$NO_2$ | 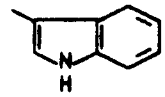 | blaustichig schwarz |
| 21 | 4-$NO_2$ | 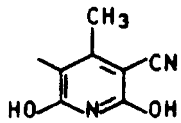 | grünschwarz |
| 22 | 4-$NO_2$ | 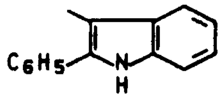 | blaustichig schwarz |
| 23 | 4-$NO_2$ | 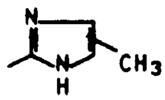 | braunstichig schwarz |
| 24 | 4-$NO_2$ | 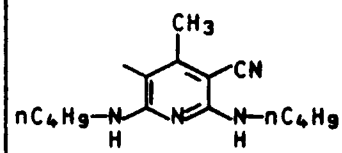 | rotstichig schwarz |
| 25 | 2-$NO_2$ | 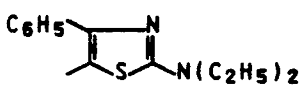 | violett-schwarz |
| 26 | 2-$NO_2$ | 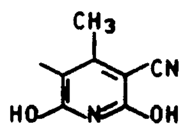 | grünschwarz |
| 27 | 2-$NO_2$ | 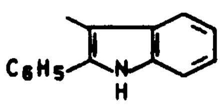 | schwarz |
| 28 | 2-$NO_2$ | 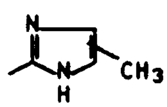 | braunstichig schwarz |
| 29 | 2-$NO_2$ | 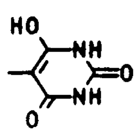 | rotstichig schwarz |

Tabelle (Forts.)

| Beispiel | Y | K | Nuance auf Papier |
|---|---|---|---|
| 30 | $2-NO_2$ | 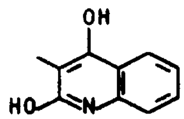 | braunschwarz |
| 31 | 4-CN | 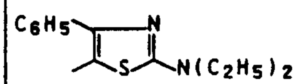 | rotstichig schwarz |
| 32 | 4-CN | 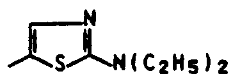 | violettstichig schwarz |
| 33 | 4-CN | 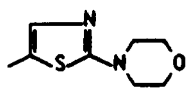 | grünstichig schwarz |
| 34 | 4-CN | 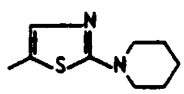 | rotstichig schwarz |
| 35 | 4-CN | 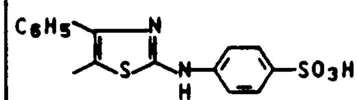 | schwarz |
| 36 | 4-CN | 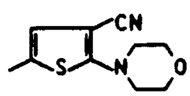 | violettstichig schwarz |
| 37 | 4-CN | 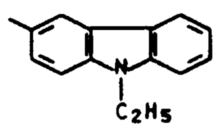 | violettstichig schwarz |
| 38 | $4-SO_3H$ | 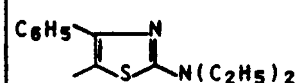 | grünstichig schwarz |
| 39 | $4-SO_2NH_2$ | 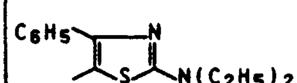 | rotstichig schwarz |
| 40 | $4-SO_2NH_2$ | 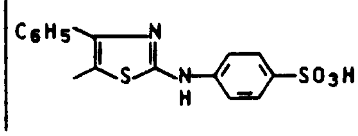 | schwarz |

Tabelle 1 (Forts.)

| Beispiel | Y | K | Nuance auf Papier |
|---|---|---|---|
| 41 | 4-$SO_2NH_2$ | 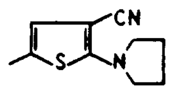 | blauschwarz |
| 42 | 4-$SO_2NH_2$ | 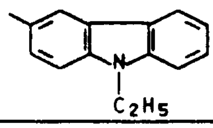 | blauschwarz |

Tabelle 2

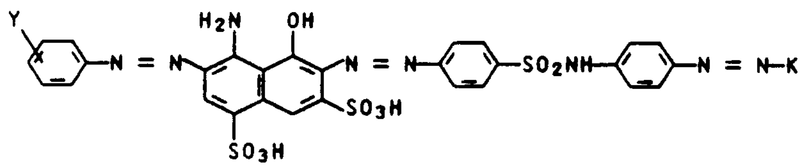

| Beispiel | Y | K | Nuance auf Papier |
|---|---|---|---|
| 43 | 4-$NO_2$ | 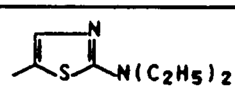 | grünstichig schwarz |
| 44 | 4-$NO_2$ | 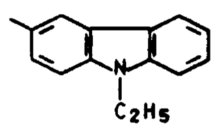 | braunstichig schwarz |
| 45 | 4-$NO_2$ | 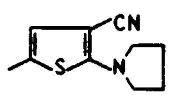 | rotstichig schwarz |
| 46 | 4-$NO_2$ | 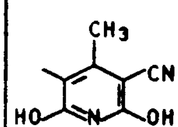 | grünstichig schwarz |
| 47 | 4-$NO_2$ | 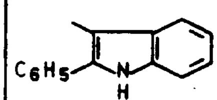 | rotstichig schwarz |
| 48 | 4-$NO_2$ | 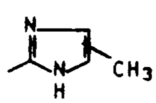 | braunstichig schwarz |

Tabelle 2 (Forts.)

| Beispiel | Y | K | Nuance auf Papier |
|---|---|---|---|
| 49 | 2—$NO_2$ | 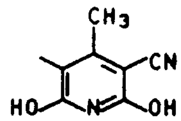 | braunstichig schwarz |
| 50 | 2—$NO_2$ | 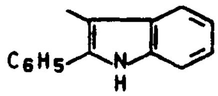 | rotstichig schwarz |
| 51 | 2—$NO_2$ | 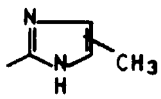 | rotstichig schwarz |
| 52 | 2—$NO_2$ | 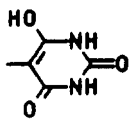 | rotstichig schwarz |
| 53 | 2—$NO_2$ | 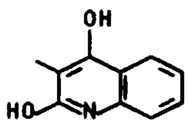 | braunschwarz |
| 54 | 2—$NO_2$ | 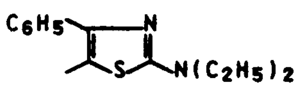 | rotstichig schwarz |
| 55 | 2—$NO_2$ | 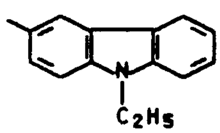 | schwarz |
| 56 | 2—$NO_2$ | 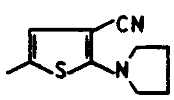 | schwarz |
| 57 | 4—$NO_2$ | 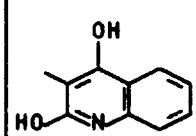 | rotstichig schwarz |

## Patentansprüche

**1.** Verbindungen der Formel I

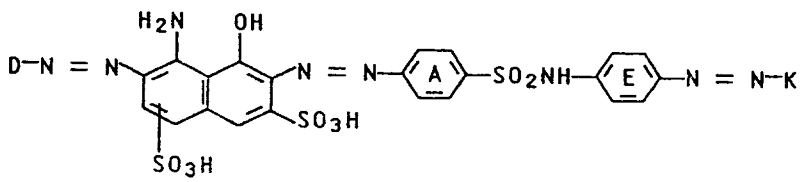

(I),

in der
die Ringe A und E noch durch Methyl, Methoxy, Chlor oder Hydroxysulfonyl substituiert sein Können, und

- D Phenyl, das gegebenenfalls durch Fluor, Chlor, Brom, Nitro, Cyano, $C_1$-$C_4$-Alkylsulfonyl, $C_1$-$C_8$-Alkyl, $C_1$-$C_4$-Alkoxy, Carboxyl, $C_1$-$C_4$-Alkoxycarbonyl, Hydroxysulfonyl, Carbamoyl, $C_1$-$C_4$-Mono-oder Dialkylcarbamoyl, Pyrrolidinocarbonyl, Piperidinocarbonyl, Morpholinocarbonyl, Piperazinocarbonyl,
N-($C_1$-$C_4$-Alkyl)piperazinocarbonyl, Sulfamoyl, $C_1$-$C_4$-Mono- oder Dialkylsulfamoyl, Pyrrolidinosulfonyl, Piperidinosulfonyl, Morpholinosulfonyl, Piperazinosulfonyl oder N-($C_1$-$C_4$-Alkyl)-piperazinosulfonyl substituiert ist und
- K einen Rest der Formel

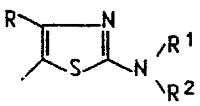 , 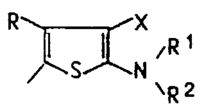 , 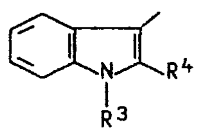 , 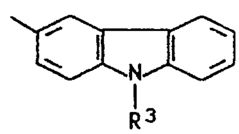 ,

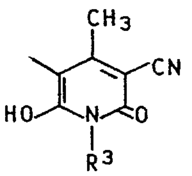 , 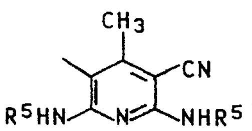 , 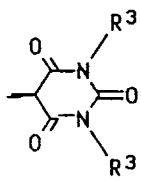 , 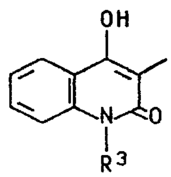 , 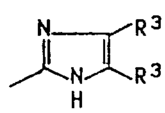 ,

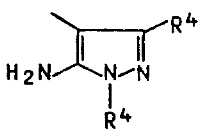 oder 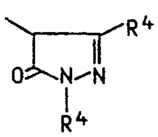 ,

bedeuten,
wobei

- R für Wasserstoff, $C_1$-$C_4$-Alkyl, gegebenenfalls durch Chlor, Brom, Methyl, Methoxy, Ethoxy, Dimethylamino oder Diethylamino substituiertes Phenyl oder Thienyl,
- $R^1$ und $R^2$ unabhängig voneinander für Wasserstoff, gegebenenfalls substituiertes $C_1$-$C_{10}$-Alkyl, $C_5$-$C_7$-Cycloalkyl, gegebenenfalls substituiertes Phenyl, Allyl oder zusammen mit dem sie verbindenden Stickstoffatom einen fünf- oder sechsgliedrigen gesättigten heterocyclischen Rest,
- $R^3$ für Wasserstoff oder $C_1$-$C_4$-Alkyl,
- $R^4$ für Wasserstoff, $C_1$-$C_4$-Alkyl oder Phenyl,
- $R^5$ für Wasserstoff oder gegebenenfalls substituiertes $C_1$-$C_{10}$-Alkyl, gegebenenfalls substituiertes Phenyl oder Allyl und
- X für Cyano, Nitro, $C_1$-$C_4$-Mono- oder Dialkylcarbamoyl, Pyrrolidinocarbonyl, Piperidinocarbonyl, Morpholinocarbonyl, Piperazinocarbonyl, N-($C_1$-$C_4$-Alkyl)piperazinocarbonyl, $C_1$-$C_4$-

Alkoxycarbonyl, $C_1$-$C_4$-Alkylcarbonyl, gegebenenfalls substituiertes Phenylcarbonyl, $C_1$-$C_4$-Alkylsulfonyl oder gegebenenfalls substituiertes Phenylsulfonyl stehen, und deren Salze.

**2.** Verbindungen gemäß Anspruch 1, die der Formel Ia entsprechen

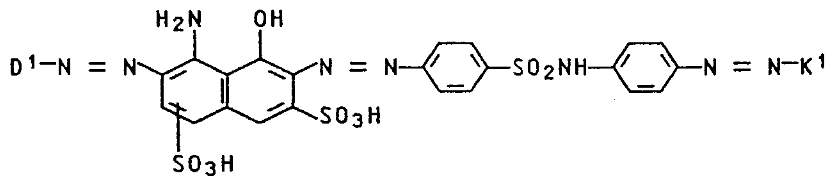

(Ia),

in der

$D^1$ Phenyl, das gegebenenfalls durch Chlor, Brom, Nitro, Cyano, Hydroxysulfonyl, Sulfamoyl, $C_1$-$C_4$-Mono- oder Dialkylsulfamoyl, Pyrrolidinosulfonyl, Piperidinosulfonyl, Morpholinosulfonyl, Piperazinosulfonyl oder N-($C_1$-$C_4$-Alkyl)piperazinosulfonyl substituiert ist und

$K^1$ den Rest einer Kupplungskomponente aus der Thiazolreihe bedeuten, und deren Salze.

**3.** Verwendung der Verbindungen gemäß Anspruch 1 zum Färben von Leder.

**4.** Verwendung der Verbindungen gemäß Anspruch 1 als Farbstoffe in Tinten.

## Claims

**1.** A compound of the formula I

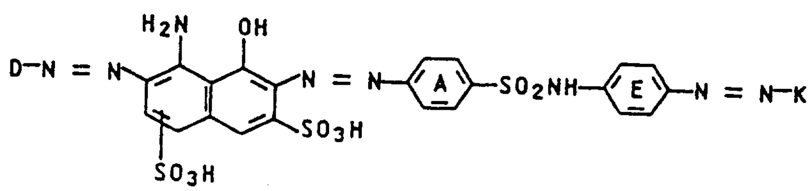

(I),

where

the rings A and E may furthermore be substituted by methyl, methoxy, chlorine or hydroxysulfonyl, and

D is phenyl which is unsubstituted or substituted by fluorine, chlorine, bromine, nitro, cyano, $C_1$-$C_4$-alkylsulfonyl, $C_1$-$C_8$-alkyl, $C_1$-$C_4$-alkoxy, carboxyl, $C_1$-$C_4$-alkoxycarbonyl, hydroxysulfonyl, carbamyl, $C_1$-$C_4$-mono- or dialkylcarbamyl, pyrrolidinocarbonyl, piperidinocarbonyl, morpholinocarbonyl, piperazinocarbonyl, N-($C_1$-$C_4$-alkyl)-piperazinocarbonyl, sulfamyl, $C_1$-$C_4$-mono- or dialkylsulfamyl, pyrrolidinosulfonyl, piperidinosulfonyl, morpholinosulfonyl, piperazinosulfonyl or N-($C_1$-$C_4$-alkyl)-piperazinosulfonyl and

K is a radical of the formula

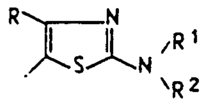 , 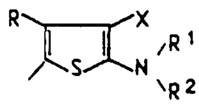 , 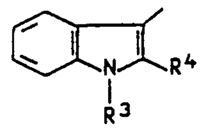 , 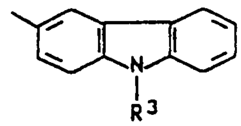 ,

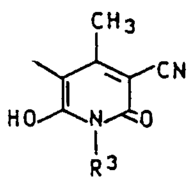 , 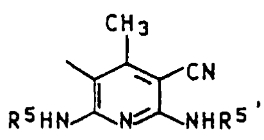 , 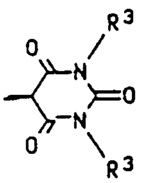 , 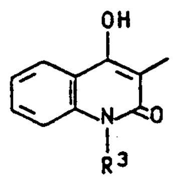 , 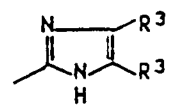 ,

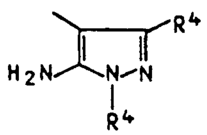 oder 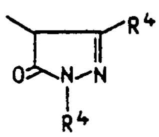 ,

where

R is hydrogen or $C_1$-$C_4$-alky or is thienyl or phenyl which is unsubstituted or substituted by chlorine, bromine, methyl, methoxy, ethoxy, dimethylamino or diethylamino,

$R^1$ and $R^2$ independently of one another are each hydrogen, unsubstituted or substituted $C_1$-$C_{10}$-alkyl, $C_5$-$C_7$-cycloalkyl, unsubstituted or substituted phenyl, or allyl, or, together with the nitrogen atom to which they are bonded, form a five-membered or six-membered saturated heterocyclic radical,

$R^3$ is hydrogen or $C_1$-$C_4$-alkyl,

$R^4$ is hydrogen, $C_1$-$C_4$-alkyl or phenyl,

$R^5$ is hydrogen or unsubstituted or substituted $C_1$-$C_{10}$-alkyl, unsubstituted or substituted phenyl or allyl and

X is cyano, nitro, $C_1$-$C_4$-mono- or dialkylcarbamyl, pyrrolidinocarbonyl, piperidinocarbonyl, morpholinocarbonyl, piperazinocarbonyl, N-($C_1$-$C_4$-alkyl)-piperazinocarbonyl, $C_1$-$C_4$-alkoxycarbonyl, $C_1$-$C_4$-alkylcarbonyl, unsubstituted or substituted phenylcarbonyl, $C_1$-$C_4$-alkylsulfonyl or unsubstituted or substituted phenylsulfonyl, and its salts.

**2.** A compound as claimed in claim 1, which is of the formula Ia

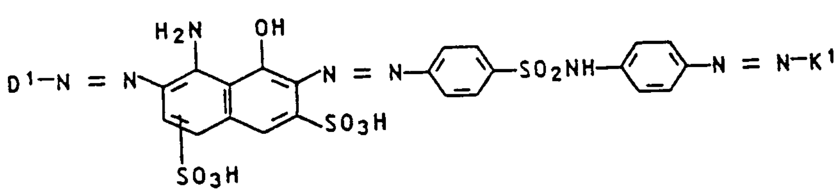 (Ia),

where

$D^1$ is phenyl which is unsubstituted or substituted by chlorine, bromine, nitro, cyano, hydroxysulfonyl, sulfamyl, $C_1$-$C_4$-mono- or dialkylsulfamyl, pyrrolidinosulfonyl, piperidinosulfonyl, morpholinosulfonyl, piperazinosulfonyl or N-($C_1$-$C_4$-alkyl)-piperazinosulfonyl and

$K^1$ is a radical of a coupling component from the thiazole series, and its salts.

**3.** The use of the compounds as claimed in claim 1 for dyeing leather.

**4.** The use of the compounds as claimed in claim 1 as dyes in inks.

## Revendications

**1.** Composés de formule I

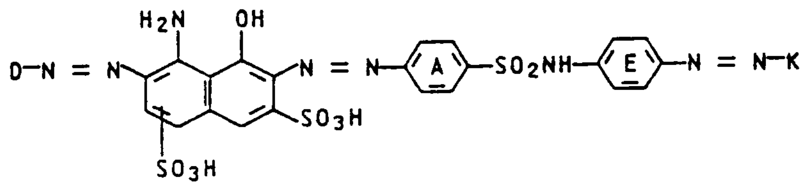

(I),

dans laquelle

les noyaux A et E peuvent encore être substitués par des groupements méthyle, méthoxy, chloro ou hydroxysulfonyle,

- D représente un reste phényle qui est éventuellement substitué par un atome de fluor, de chlore, de brome ou par un groupement nitro, cyano, (alkyl en $C_1$-$C_4$)sulfonyle, alkyle en $C_1$-$C_8$, alcoxy en $C_1$-$C_4$,carboxyle, (alcoxy en $C_1$-$C_4$)carbonyle, hydroxysulfonyle, carbamoyle, mono- ou di(alkyl en $C_1$-$C_4$)carbamoyle, pyrrolidinocarbonyle, pipéridinocarbonyle, morpholinocarbonyle, pipérazinocarbonyle, N-(alkyl en $C_1$-$C_4$)pipérazinocarbonyle, sulfamoyle, monoou di-(alkyle en $C_1$-$C_4$)sulfamoyle, pyrrolidinosulfonyle, pipéridinosulfonyle, morpholinosulfonyle, pipérazinosulfonyle ou N-(alkyl en $C_1$-$C_4$)pipérazinosulfonyle, et
- K représente un reste de formule

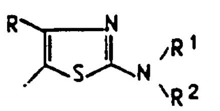 , 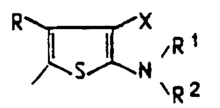 , 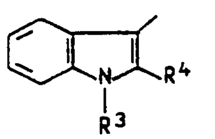 , 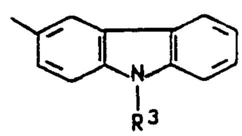 ,

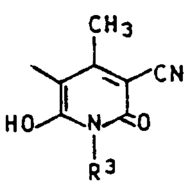 , 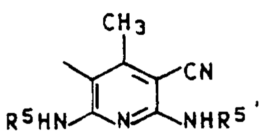 , 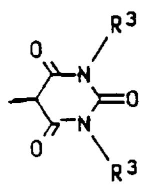 , 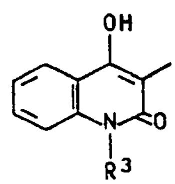 , 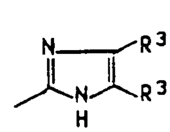 ,

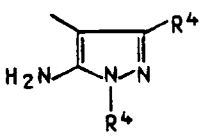 ou 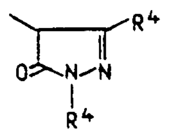 ,

où

- R est mis pour un atome d'hydrogène ou pour un reste alkyle en $C_1$-$C_4$, phényle éventuellement substitué par un atome de chlore, de brome ou par un groupement méthyle, méthoxy, éthoxy, diméthylamino ou diéthylamino, ou pour un reste thiényle,
- $R^1$ et $R^2$ sont mis chacun, indépendamment l'un de l'autre, pour un atome d'hydrogène ou pour un reste alkyle en $C_1$-$C_{10}$ éventuellement substitué, cycloalkyle en $C_5$-$C_7$, phényle éventuellement substitué, allyle, ou forment ensemble, avec l'atome d'azote qui les relie, un reste hétérocyclique saturé à 5 ou 6 maillons,
- $R^3$ est mis pour un atome d'hydrogène ou pour un reste alkyle en $C_1$-$C_4$,
- $R^4$ est mis pour un atome d'hydrogène ou pour un reste alkyle en $C_1$-$C_4$ ou phényle,
- $R^5$ est mis pour un atome d'hydrogène ou pour un reste alkyle en $C_1$-$C_{10}$ éventuellement substitué, phényle éventuellement substitué ou allyle, et

X est mis pour un reste cyano, nitro, mono- ou di(alkyl en $C_1$-$C_4$)carbamoyle, pyrrolidinocarbonyle, pipéridinocarbonyle, morpholinocarbonyle, pipérazinocarbonyle, N-(alkyl en $C_1$-$C_4$)-pipérazinocarbonyle, (alcoxy en $C_1$-$C_4$)carbonyle, (alkyl en $C_1$-$C_4$)carbonyle, phénylcarbonyle éventuellement substitué, (alkyl en $C_1$-$C_4$)sulfonyle ou phénylsulfonyle éventuellement substitué,

ainsi que leurs sels.

2. Composés selon la revendication 1 qui répondent à la formule Ia

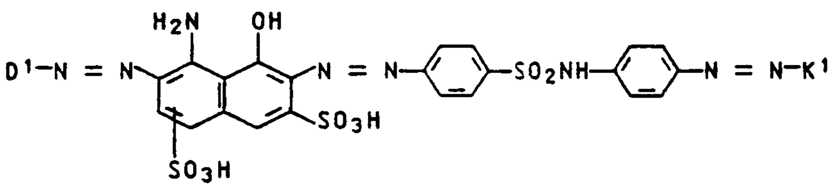

(Ia),

dans laquelle

$D^1$ représente un reste phényle qui est éventuellement substitué par un atome de chlore, de brome ou par un groupement nitro, cyano, hydroxysulfonyle, sulfamoyle, mono- ou di(alkyl en $C_1$-$C_4$)sulfamoyle, pyrrolidinosulfonyle, pipéridinosulfonyle, morpholinosulfonyle, pipérazinosulfonyle ou N-(alkyl en $C_1$-$C_4$)pipérazinosulfonyle, et

$K^1$ représente le reste d'un composant de copulation de la série des thiazoles,

ainsi que leurs sels.

3. Utilisation des composés selon la revendication 1 pour la teinture de cuirs.

4. Utilisation des composés selon la revendication 1 comme colorants dans des encres.